## Europäisches Patentamt
## European Patent Office
## Office européen des brevets

(19)

(11) Veröffentlichungsnummer: **0 101 875**
**B1**

(12) **EUROPÄISCHE PATENTSCHRIFT**

(45) Veröffentlichungstag der Patentschrift:
09.04.86

(51) Int. Cl.⁴: **C 08 F 10/02, C 08 F 2/00**

(21) Anmeldenummer: **83107021.4**

(22) Anmeldetag: **18.07.83**

(54) **Verfahren zur Herstellung von Polymerisaten des Ethylens.**

(30) Priorität: **24.07.82 DE 3227746**

(43) Veröffentlichungstag der Anmeldung:
**07.03.84 Patentblatt 84/10**

(45) Bekanntmachung des Hinweises auf die Patenterteilung:
**09.04.86 Patentblatt 86/15**

(84) Benannte Vertragsstaaten:
**AT BE DE FR GB NL**

(56) Entgegenhaltungen:
**DE - A - 2 041 910**
**DE - A - 2 531 154**
**GB - A - 1 047 191**

(73) Patentinhaber: **BASF Aktiengesellschaft,
Carl-Bosch-Strasse 38, D-6700 Ludwigshafen (DE)**

(72) Erfinder: **Werner, Michael, Dr., Harzburger Weg 21,
D-6800 Mannheim 33 (DE)**
Erfinder: **Oeder, Dieter, Dr., Antoniusstrasse 1,
D-5047 Wesseling (DE)**
Erfinder: **Ziegler, Walter, Dr., Starenweg 15,
D-6803 Edingen-Neckarhausen (DE)**
Erfinder: **Zentgraf, Ernst, Tilsiter Strasse 65,
D-6703 Limburgerhof (DE)**
Erfinder: **Brandstetter, Franz, Dr., Ritterbueschel 45,
D-6730 Neustadt (DE)**

LIBER, STOCKHOLM 1986

## Beschreibung

Die Erfindung betrifft ein Verfahren zur Herstellung von Ethylenpolymerisaten durch Homopolymerisation von Ethylen oder Copolymerisation von Ethylen mit anderen mit Ethylen copolymerisierbaren Verbindungen in einer Polymerisationszone bei Drücken von 500 bis 5 000 bar und Temperaturen von 50 bis 450° C in Gegenwart von radikalisch zerfallenden Polymerisationsinitiatoren, indem man dem Polymerisationssystem an dessen Einlaßstelle ein Gemisch aus Ethylen, Regler und gegebenenfalls Initiator und/oder Comonomer und gleichzeitig an mindestens einer Stelle des Polymerisationssystems Initiator zuführt.

Verfahren zur Herstellung von Ethylenpolymerisaten und -copolymerisaten durch Polymerisation von Ethylen, gegebenenfalls in Anwesenheit von Coreaktanten in Rohrreaktoren oder Rührautoklaven als Polymeristationszonen in Gegenwart von Initiatoren und gegebenenfalls kettenübertragenden Substanzen, Stabilisatoren oder Lösungsvermittlern bei Drücken oberhalb 500 bar und Temperaturen von 50 bis 450° C sind bekannt (vgl. Ullmanns Encyklopädie der technisched Chemie, 4. Auflage, Band 19 (1980), Seiten 167 bis 175).

Es ist auch bekannt, die Hochdruckpolymerisation in Gegenwart von radikalbildenden Substanzen, die in Form von Lösungen in die Polymerisationszone eingebracht werden, durchzuführen. Durch das Einbringen der Initiatoren an mindestens einer Stelle des Reaktors kommt es häufig zu Temperaturschwankungen und somit zu einem unregelmäßigen Reaktionsverlauf. Dies war Anlaß zu einem recht umfangreichen meß-DE-OS 25 31 154 beschrieben ist.

Aufgabe der vorliegenden Erfindung war es, ohne großen technischen Aufwand einen Weg zu finden, der die Herstellung von Polymerisaten des Ethylens in Gegenwart von radikalbildenden Substanzen, die direkt in die Reaktionszone eingebracht werden, ohne merkliche Schwankungen in der Reaktionsfürung ermöglicht.

Diese Aufgabe wird dadurch gelöst, daß die separate Zufuhr des Initiators in Lösung durch schnellaufende Pumpen erfolgt.

Das Verfahren ist auf die Homopolymerisation von Ethylen sowie auf die Copolymerisation des Ethylens mit anderen, mit Ethylen copolymerisierbaren Verbindungen anwendbar.

Als solche kommen alle die Verbindungen in Frage, die üblicherweise unter Hochdruckbedingungen mit Ethylen in Gegenwart von Radikale bildenden Polymerisationsinitiatoren copolymerisiert werden können. Solche Verbindungen sind z.B. Vinylacetat, n-Butylacrylat, Methylacrylat, Acrylnitril, Vinylether, Acrylsäure oder Acrylamid, wobei der Anteil an Comonomeren im Copolymerisat maximal 50 Gew.% betragen sollte.

Die Polymerisation des Ethylens, gegebenenfalls zusammen mit anderen Verbindungen, erfolgt bei Drücken von 500 bis 5000 bar, vorzugsweise 1 500 bis 3 000 bar. Die Temperaturen im Polymerisationssystem liegen zwischen 50 und 450° C, vorzugsweise zwischen 150 und 350° C. Die Bedingungen im Polymerisationssystem lassen sich apparativ in sogenannten Rohrreaktoren und bzw. Autoklavenreaktoren einstellen. Unter Rohrreaktoren versteht man rohrförmige Polymerisationsgefäße, deren Längenausdehnung das über 2000 fache, bevorzugt das 5000- bis 50 000 fache des Rohrdurchmessers beträgt. Wie üblich wird ein Teil der Polymerisationswärme durch Kühlung des Rohrreaktors von außen mit Wasser abgeführt. Die Polymerisation des Ethylens im Rohrreaktor wird kontinuierlich betrieben. Es kann aber auch mit anderen Reaktoren gearbeitet werden, z.B. mit Rührautoklaven. Rührautoklaven sind Druckgefäße mit einem Längen-/Durchmesser-Verhältnis von 5 bis 20, die zur guten Durchmischung des Reaktionsgemisches mit einem Rührer versehen sind.

Die Hochdruckpolymerisation des Ethylens wird üblicherweise durch Zufuhr von radikalbildenden Substanzen initiiert. Diese Substanzen können alleine, in Mischung oder in Kombination mit Luft/Sauerstoff verwendet werden. Die Dosierung der radikalbildenden Substanzen erfolgt an der Einlaßstelle oder gegebenenfalls an weiteren Stellen hinter der Einlaßstelle entlang des Rohrreaktors in Strömungsrichtung des polymerisierenden Ethylens. Unter Einlaßstelle wird im allgemeinen der Anfang des rohrförmigen Reaktors verstanden.

Das Molekulargewicht des anfallenden Polymerisates kann durch die üblichen Regler, z.B. Kohlenwasserstoffe wie Propan, Propen etc., Ketone wie Aceton, Ethylketon etc. oder Aldehyde wie Propionaldehyd auf den gewünschten Wert gebracht werden.

Als radikalisch zerfallende Initiatoren werden bevorzugt organische Peroxide und Hydroperoxide oder Gemische aus Peroxiden bzw. Hydroperoxiden oder organische Peroxide und Hydroperoxide in Kombination mit Sauerstoff verwendet. In Frage kommen dabei alle gängigen bekannten Peroxide und Hydroperoxide.

Die Konzentration des zudosierten Initiators liegt im allgemeinen zwischen 0,01 und 50 Molppm, bevorzugt 0,1 bis 20 Molppm, bezogen auf die gesamte, dem Polymerisationssystem zugeführte Ethylenmenge.

Als geeignetes inertes Lösungsmittel für den Initiator werden zweckmäßig aliphatische Kohlenwasserstoffe wie Oktan oder Benzin, verwendet. Es können gegebenenfalls auch andere inerte Lösungsmittel wie Chlorbenzol, Cyclohexan oder Methanol, eingesetzt werden. Die für das Zuführen der Initiatoren erforderliche Menge an Lösungsmittel ist im Verhältnis zur Menge an Ethylen gering und beträgt im allgemeinen 0,01 bis 5 Gew.%, vorzugsweise 0,1 bis 2 Gew.%, bezogen auf die Menge Reaktionsgas. Die Initiatoren enthaltende Lösung wird dabei an der geeigneten Stelle, d.h. an der Einlaßstelle und gegebenenfalls an weiteren Stellen hinter der Einlaßstelle entlang des Rohrreaktors in Strömungsrichtung des polymerisierenden Ethylens mit Hilfe schnell laufender Pumpen direkt in das Reaktonsgemisch dosiert.

Um dünnviskose, nichtschmierende Flüssigkeiten auf hohe Drucke, speziell auf Drucke oberhalb 2000 bar zu fördern, werden in der Technik sowohl Hochdruckkolbenpumpen als auch Hochdruckmembranpumpen verwendet.

Bei beiden Pumpentypen treten jedoch bei der Förderung dünnviskoser, nichtschmierender Flüssigkeiten auf Drucke oberhalb 2000 bar Nachteile auf, so beispielsweise bei Hochdruckmembranpumpen zu kurze Standzeiten im Dauerbetrieb, hervorgerufen durch Bruch der Membranen. Der Nachteil bei langsam laufenden Hochdruckkolbenpumpen (Hubzahl kleiner 60 min$^{-1}$) wiederum ist der lange Stillstand des Kolbens am Ende des Druckhubs und damit die Unterbrechung des Förderstroms. Gerade dieser Nachteil wirkt sich bei der Dosierung von katalysatoren bei der Synthese von Hochdruckpolyethylen besonders negativ aus. Diese langsam laufenden Aggregate werden jedoch deshalb verwendet, weil die Maschinenteile geringer belastet werden und damit die Lebensdauer dieser Hochdruckkolbenpumpen erhöht wird. Beispielsweise entsteht in der Stopfbüchse aus Weichstoffen weniger Reibungswärme und damit geringerer Verschleiß. Gleichzeitig sind die durch extreme Druckamplituden hochbelasteten drucktragenden Teile - insbesondere der Kolbenpumpenkopf - pro Zeiteinheit weniger belastet. Diese langsam laufenden Hochdruckkolbenpumpen sind in ihrer Bauweise jedoch sehr groß und damit teuer.

Damit bei Vermeidung obiger Nachteile dünnviskose, nichtschmierende Flüssigkeiten gegen Drucke oberhalb 2000 bar gefördert werden können, müssen schnell laufende Triebwerke (Hubzahl größer 60 min$^{-1}$) verwendet werden, um die Bauweise zu verkleinern. Gleichzeitig müssen die Standzeiten der Hochdruckkolbenpumpen im Dauerbetrieb erhöht werden.Um letzteres zu erreichen, müssen insbesondere die Verschleißerscheinungen im Kolbenpumpenkopf reduziert bzw. vermieden werden. Derartige Hochdruckkolbenpumpen mit einer Hubzahl größer als 60 min$^{-1}$ sind in der EP-A1-0101876 beschrieben.

Erfindungsgemäß ist der verwendete Kolbenpumpenkopf aus auslagerungshärtbarem Stahl gefertigt. Dies sind Stähle mit speziellen Legierungselementen, welche auf der Grundlage einer intermetallischen Verbidnung durch Auslagern des fertig bearbeiteten Teils bei 480° C bis 600° C unter Inertgas ihre hohe Festigkeit bei ausreichender Zähigkeit und Korrosionsbeständigkeit erreichen. Speziell wird der Stahl 1.4534 verwendet und bei 540°C ausgelagert (vgl. EP-A1-0101876).

Die Dosierung der Initiatoren mit Hilfe der schnell laufenden Pumpen direkt in den Reaktor ermöglicht eine kontinuierliche Dosierung des Initiators und damit konstante Fahrweise, führt zu homogeneren Produkten und erhöht die Flexibilität in der Verfahrensweise.

### Beispiele

Die Polymerisation von Ethylen wurde in allen Versuchen in einem rohrförmigen Reaktor als Polymerisationszone mit einem Längen-/Durchmesser-Verhältnis von etwa 10 000 bzw. 20 000 durchgeführt. Zur Abführung der Polymerisationswärme wurden die Rohrwände von außen mit Wasser gekühlt. Das sauerstoffhaltige Ethylen wurde mit einem Molgewichtsregler versetzt und auf den Reaktionsdruck komprimiert.

Das erhaltene Polyethylen wurde in bekannter Weise in den dem Reaktor nachgeschalteten Abscheidern vom nicht umgesetzten Ethylen abgetrennt.

### Beispiel 1

Der Reaktor (Einzonenreaktor; L/D ca 10 000) wurde auf der Eingangsseite mit einem auf 2 700 bar komprimierten Gemisch aus 900 000 Gewichtsteilen Ethylen und 23 Molppm Luftsauerstoff, bezogen auf das Ethylen, beschickt. Nach dem Vorwärmer, der eine Temperatur von ca. 140°C hatte, wurden mit einer Pumpe (80 Hübe/min) 8 Molppm von tert. Butylperpivalat in Form einer 0,1 molaren Lösung in den Reaktor eingespeist. Das Temperaturmaximum lag bei 290°C. Als Molekulargewichtsregler wurde Propionaldehyd zugesetzt. Die Reglermenge wurde so bemessen, daß sich ein Molekulargewicht entsprechend eines Schmelzindexes MFI von 0,3 g/10 min, gemessen nach DIN 53 735, einstellte.

Die Reaktion war stabil, es wurden keine Temperaturschwankungen sowohl an der Eingangsseite des Reaktors, wo das Peroxid dosiert wurde, als auch am Temperaturmaximum festgestellt.

### Vergleichsversuch A

Es wurde verfahren, wie in Beispiel 1 beschrieben mit der Ausnahme, daß anstelle einer schnell laufenden Pumpe eine Druckverstärkerpumpe, wie beispielsweise in der US-PS 3 234 882 beschrieben, mit einer Hubzahl von 28/min verwendet wurde. Hierbei traten nach der Einspeisstelle der Peroxidlösung Temperaturschwankungen bis zu 15°C auf, die sich über den gesamten Reaktorlauf fortsetzen.

## Beispiel 2

Die Polymerisation von Ethylen wurde in einem rohrförmigen Reaktor mit einem Längen-/Durchmesser-Verhältnis von etwa 20 000 durchgeführt. Zur Abführung der Polymerisationswärme wurden die Rohrwände von außen mit Wasser gekühlt. Das sauerstoffhaltige Ethylen wurde mit einem Molgewichtsregler versetzt und auf den Reaktionsdruck komprimiert. Von dem Reaktionsgas wurde ein Teil der Einlaßstelle des Reaktors zugeführt und ein Teil dem Reaktor etwa in der Mitte an einer zweiten Zufuhrstelle zugegeben, nachdem sich die Reaktion in der ersten Zone mit einem Temperaturmaximum ausgebildet hatte und die Temperatur des Gemisches schon wieder am Abklingen war. Durch diese Maßnahme bilden sich zwei Reaktionszonen in dem rohrförmigen Reaktor (Zweizonen-Rohrreaktor) aus.

Dem oben beschriebenen Reaktor wurden bei einem Reaktionsdruck von 2 500 bar, gemessen an der zweiten Zulaufstelle, gleichzeitig zwei Ethylenströme zugeführt, wobei dem Strom in den Reaktoreinlaß 23 Molppm Luftsauerstoff, bezogen auf das Ethylen und dem Strom in die zweite Zufuhrstelle 3,0 Molppm Luftsauerstoff, bezogen auf die Ethylenmenge in der zweiten Reaktionszone zugesetzt wurden.

Nach dem Vorwärmer am Eingang der ersten Reaktionszone wurden mit einer Pumpe (120 Hübe/min) 8 Molppm von tert. Butylperpivalat in Form einer 0,1 molaren Lösung in Benzin in den Reaktor eindosiert. Die Maximaltemperatur der durch Sauerstoff und tert. Butylperpivalat initiierten Reaktion lag bei 290°C. Anschließend an dieses Maximum wurde in der ersten Reaktionszone zusätzlich an der Stelle, an der die Temperatur der durch Sauerstoff und tert. Butylperpivalat initiierten Reaktion 275°C erreichte, eine Menge von 0,6 Molppm Methylisobutylketonhydroperoxid in verdünnter Form (Benzin) mit Hilfe einer schnell laufenden Pumpe (120 Hübe/min) zudosiert, wodurch sich in der ersten Zone ein zweites Maximum mit 290°C ausbildete.

In der zweiten Reaktionszone wurde eine Maximaltemperatur von 290°C erreicht. Als Molekulargewichtsregler wurde Propionaldehyd zugesetzt. Die Reglermenge wurde so bemessen, daß sich ein Molekulargewicht entsprechend eines Schmelzindexes MFI von 0,8 g/10 min, gemessen nach DIN 53 735, einstellte. Die Dichte lag bei 0,924 g/cm$^3$ (gemessen nach DIN 53 479).

An keiner der Peroxideinspeisstellen wurden Temperaturschwankungen beobachtet.

## Vergleichsversuch 3

Es wurde verfahren, wie in Beispiel 2 beschrieben mit der Ausnahme, daß anstelle der schnell laufenden Pumpe eine Druckverstärkerpumpe mit einer Hubzahl von 25/min verwendet wurde. Hierbei kam es zu Temperaturschwankungen bis zu 10°C und einem ständigen Verschieben des Temperaturmaximums, was zu einer Reihe von Betriebsstörungen führte.

## Patentanspruch

1. Verfahren zur Herstellung von Ethylenpolymerisaten durch Homopolymerisation von Ethylen oder Copolymerisation von Ethylen mit anderen mit Ethylen copolymerisierbaren Verbindungen in einer Polymerisationszone bei Drücken von 500 bis 5 000 bar und Temperaturen von 50 bis 450°C in Gegenwart von radikalisch zerfallenden Polymerisationsinitiatoren, indem man dem Polymerisationssystem an dessen Einlaßstelle ein Gemisch aus Ethylen, Regler und gegebenenfalls Initiator und/oder Comonomer und gleichzeitig an mindestens einer Stelle des Polymerisationssystems Initiator zuführt, <u>dadurch gekennzeichnet</u>, daß die separate Zufuhr des Initiators in Lösung durch eine Hochdruckkolbenpumpe mit einer Hubzahl größer 60 min$^{-1}$ erfolgt.

## Claim

A process for the production of ethylene polymers by homopolymerization of ethylene or copolymerization of ethylene with other compounds which are copolymerizable with ethylene, in a polymerization zone at a pressure of from 500 to 5,000 bars and a temperature of from 50 to 450°C in the presence of a polymerization initiator which decomposes into free radicals, a mixture of ethylene, regulator and, if desired, initiator and/or any comonomer being fed into the polymerization system at its inlet, and initiator being simultaneously fed into the polymerization system at at least one other point, wherein the separate feeding of the initiator in solution is effected by means of a high-pressure piston pump where the number of strokes is higher than 60 per minute.

## Revendication

Procédé de préparation de polymères d'éthylène par homopolymérisation d'éthylène ou copolymérisation d'éthylène avec d'autres composés copolymérisables avec l'éthylène, dans une zone de polymérisation sous des pressions de 500 à 5000 bar et à des températures de 50 à 450°C, en présence d'initiateurs de polymérisation susceptibles de décomposition radicalaire, un mélange d'éthylène, d'un régulateur et, le cas échéant, d'initiateur et/ou de comonomère étant introduit dans le système de polymérisation au point d'entrée de celui-ci et, en même temps, un initiateur étant introduit en un point au moins du système de polymérisation, caractérisé en ce que l'introduction séparée de l'initiateur est effectuée en solution par une pompe haute pression à piston ayant un nombre de courses supérieur à 60 $mn^{-1}$.